# EUROPÄISCHE PATENTANMELDUNG

(11) **EP 2 368 919 A1**
(43) Veröffentlichungstag der Anmeldung: **28.09.2011**
(21) Anmeldenummer: 10003220.0
(22) Anmeldetag: 25.03.2010
(51) Int. Cl.: C08F 2/50

(54) **Nanopartikuläre Photoinitiatoren**

(71) Anmelder: Universität des Saarlandes, 66123 Saarbrücken (DE)
(72) Erfinder: Kuhn, Sylvia, 66440 Blieskastel (DE); Schmitt, Michael, 66793 Reisbach (DE); Hempelmann, Rolf, 66386 St. Ingbert (DE)
(74) Vertreter: Samson & Partner

(57) **Zusammenfassung**

Ein nanopartikulärer, isolierbarer Photoinitiator umfasst einen nanopartikulären, sichtbares oder UV-Licht absorbierenden Photohalbleiter und einen an den Photohalbleiter gebundenen Initiierungsradikal-Vorläufer, der bei Bestrahlung mit einer Wellenlänge, die von dem Photohalbleiter absorbiert wird, in ein neutrales stabiles Molekül und ein Radikal mit einer Lebensdauer von 5x10⁻³ s bis 15 s zerfällt. In einem Verfahren zur Radikalpolymerisation wird ein derartiger nanopartikulärer Photoinitiator als Photoinitiator bei einer Polymerisation eines oder mehrerer Monomere, die radikalisch polymerisiert werden können, eingesetzt.

## Beschreibung

Die vorliegende Erfindung betrifft nanopartikuläre Photoinitiatoren für die radikalische Polymerisation sowie ein Polymerisationsverfahren, das sie verwendet.

### Hintergrund der Erfindung

In der seit Langem bekannten Kolbe-Reaktion werden RCOO⁻-lonen elektrochemisch zu einem RCOO•-Radikal oxidiert, dann wird ein Molekül CO₂ abgespaltet, was ein Radikal R• (im Fall von Alkansäuren ein Alkyradikal) zurücklässt. Anschließend dimerisieren zwei Radikale R• (z.B. Alkylradikale) unter Bildung einer C-C-Bindung zu R-R. In der Photo-Kolbe-Reaktion, die von B. Kraeutler et al. erstmals beschrieben wurde (B. Kraeutler und A. J. Bard, J. Am. Chem. Soc., 99, 7729 (1977)) übernimmt ein photoangeregter Halbleiter die Oxidation der Carboxylat-Gruppe. Die Elektronenfehlstelle des Halbleitermaterials (z.B. TiO₂) oxidiert in diesem Fall die der Dispersion zugesetzte Carbonsäure zu einem Carboxylradikal, welches durch Fragmentierung zu dem flüchtigen Produkt CO₂ und einem Radikal reagiert, das, wenn es reaktiv ist (wie das Methyl-Radikal), mit einem weiteren Radikal dimerisiert. Stabile, sterisch gehinderte Radikale, wie das Triphenylmethyl-Radikal, dimerisieren jedoch erwartungsgemäß nicht (B. Kraeutler, C. D. Jaeger und A. J. Bard, J. Am. Chem. Soc., 100, 4903-4905, 1978). B. Kraeutler et al. (B. Kraeutler, H. Reiche und A. J. Bard, J. Polym. Science Part C: Polym. Lett. Ed., 17, 535-538 (1979)) ist es auch gelungen, eine radikalische Kettenreaktion in einer Eisessigdispersion von TiO₂ und Methylmethacrylat (MMA) zu initialisieren (vermutlich durch das intermediär entstandene Methyl-Radikal). Wenn jedoch unverdünntes, wasserfreies Vinylacetat und wenig Eisessig in Gegenwart von dispergiertem TiO₂ bestrahlt werden, findet keine Polymerisation statt (D. Yang, X. Y. Ni, W. K. Chen, Z. Weng, Journal of Photochemistry and Photobiology A-Chemistry 2008, 195, 323).

Es ist ein Ziel der Erfindung, die Initiierung einer radikalischen Polymerisation in einer zur Photo-Kolbe-Reaktion ähnlichen Weise unter vielfältigeren Bedingungen zu ermöglichen, als dies bei der Photo-Kolbe-Reaktion bisher der Fall war.

Ein weiteres Problem, das durch die vorliegende Erfindung gelöst werden soll, wird im Folgenden beschrieben.

Gebräuchliche Photoinitiatoren für Offset-Druckfarben, Lacke und Klebstoffe sind reaktive niedrigmoleklare Verbindungen mit einer Molmasse M < 400. Beispiele sind PhC(OCH₃)₂C(O)Ph (Irgacure 651) PhC(O)C(CH₃)₂OH (Darocur 1173) oder Isopropylthioxanthon. Durch UV-Bestrahlung wird die C(O)-CR₂-Bindung gespalten und es entstehen mesomeriestabilisierte Radikale, welche die Polymerisation der Prepolymere in den Druckfarben-, Lack- oder Klebstoffformulierungen starten. In der Technik spricht man von der Härtung der Binder bzw. von der Trocknung der UV-Druckfarben. Während des Härtungsprozesses findet aber nur eine Umsetzung in der Größenordnung von 10 % des Photoinitiators statt (J.-P. Fouassier, Photoinitiation, Photopolymerization, and Photocuring: Fundamentals and Applications, Hanser Gardner Pubns, 1995). Der verbleibende Anteil der Initiatormoleküle ist in der Lage, in der Matrix des gehärteten Systems (Druckfarbe, Lack oder Klebstoff) zu diffundieren oder zu migrieren.

Aufgrund der hohen chemischen Reaktivität der Initiatormoleküle sind diese für den Menschen toxisch. Demgemäß geht von diesen Verbindungen, wenn sie aus den Druckfarben, Lacken oder Klebstoffen austreten, ein gesundheitliches Risiko aus. Es gibt entsprechende Stellungnahmen des Bundesinstitutes für Risikobewertung. Als Beispiel sei das Zitat genannt: "Lebensmittelverpackungen werden zur Information des Verbrauchers bedruckt. In den Druckfarben sind chemische Substanzen enthalten, die auf das Lebensmittel übergehen und verzehrt werden können. Dazu gehören auch die Photoinitiatoren. Sie werden eingesetzt, um die Druckfarbe innerhalb kürzester Zeit auszuhärten." *(Stellungnahme Nr. 028*/*2008 des BfR* "Ersatz von Isopropylthioxanthon (ITX) in Druckfarben durch nicht bewertete Stoffe ist nicht sachgerecht", http://www.bfr.bund.de/, 2008). In der *Stellungnahme Nr. 044*/*2005 des BfR "Bestandteile von Druckfarben in Getränken aus Kartonverpackungen",* http://www.bfr.bund.de/, 2005, wird gezeigt, dass kommerzielle Photoinitiatoren im Inneren von Lebensmittelverpackungen gefunden worden sind. Das stellt ein außerordentliches Problem für den Druckmaschinenbau und die Druckfarbenhersteller dar.

Das Problem ist bis zum heutigen Zeitpunkt nicht gelöst. Zunächst wurde davon ausgegangen, dass nichtfragmentierende Initiatoren, sogenannte Initiatoren der 2. Generation, eine Alternative zu fragmentierenden Photoinitiatoren seien (B. Müller, U. Poth, Lackformulierung und Lackrezeptur, Vol. 2, Vincentz, Coating Compendien, 2005). Diese haben sich aber in der Praxis nicht durchgesetzt. Nur begrenzt umgesetzt sind bisher die Lösungen, welche die Photoinitiatoren an organische Matrices anbinden (s. z.B. EP 0 859 797 B1 und EP1 449 645 B1). Dabei erfolgt die Anbindung photoaktiver Gruppen an komplexe organische Makromoleküle. Nachteilig ist dabei, dass die letztgenannten häufig einen hohen Anteil an weiteren funktionellen Gruppen tragen, deren gesundheitliches Risiko nicht bekannt ist. Ferner dienen sie als unreaktive Träger, welche die Beweglichkeit einschränken, aber dadurch auch Einfluss auf die Reaktivität haben, so dass ein erhöhter Anteil an erforderlichem Initiator zu erwarten ist. Auch ist die Synthese derartiger Initiatoren aufwändig.

### Zusammenfassung der Erfindung

Die vorliegende Erfindung betrifft nanopartikuläre, isolierbare Photoinitiatoren, umfassend einen nanopartikulären, sichtbares oder UV-Licht absorbierenden Photohalbleiter und einen an den Photohalbleiter gebundenen Initiierungsradikal-Vorläufer, der bei Bestrahlung mit einer Wellenlänge, die von dem Photohalbleiter absorbiert wird, in ein neutrales stabiles Molekül und ein Radikal mit einer Lebensdauer ≥ 5x10⁻³ zerfällt.

Ferner betrifft die Erfindung ein Verfahren zur Radikalpolymerisation, das dadurch gekennzeichnet ist, dass der oben beschriebene nanopartikuläre Photoinitiator als Photoinitiator bei einer Polymerisation eines oder mehrerer Monomere, die radikalisch polymerisiert werden können, eingesetzt wird.

### Kurze Beschreibung der Figuren

Figur 1 zeigt schematisch den Aufbau eines erfindungsgemäßen nanopartikulären Photoinitiators, wobei VB Valenzband bedeutet und LB Leitungsband bedeutet.
Figur 2 zeigt ein Schema einer Radikalpolymerisation (R^{•}= Initüerungsradikal oder Radikalstarter, P₁^{•} = Polymerradikal der Kettenlänge 1, Pₙ^{•}= Polymerradikal der Kettenlänge n, M = Monomer)
Figur 3 zeigt das Infrarotspektrum in Mehrfachreflexion eines gemäß Beispiel 1 hergestellten nanopartikulären Photoinitiators im Vergleich zum unmodifizierten Photohalbleiter.
Figur 4 zeigt das Infrarotspektrum in Mehrfachreflexion eines gemäß Beispiel 2 hergestellten nanopartikulären Photoinitiators im Vergleich zum unmodifizierten Photohalbleiter.
Figur 5 zeigt eine Polymerisationskinetik mit den nanopartikulären Photoinitiatoren der Beispiele 1 und 2, mit dem kommerziellen Initiator Darocur 1173 und ohne Initiator.

### Ausführungsformen der Erfindung

Die erfindungsgemäßen nanopartikulären Photoinitiatoren umfassen einen nanopartikulären, sichtbares oder UV-Licht absorbierenden Photohalbleiter, der mit einem Initiierungsradikal-Vorläufer oberflächenmodifiziert ist.

Mit "Nanopartikel" bzw. "nanopartikulär" sind hierin Partikel mit einer Größe von 1 bis 100 nm, bevorzugt von 1 bis 50 nm, bevorzugter von 1 bis 30 nm und insbesondere von 2 bis 15 nm, z.B. von 5 nm, gemeint.

Der Fachausdruck "Photoinitiator" wird in seiner üblichen Bedeutung verwendet, die dem Fachmann hinreichend geläufig ist, d.h. mit einem Photoinitiator ist hierin ein Material gemeint, das bei Belichten mit UV- oder sichtbarem Licht ein Radikal freisetzt.

Die nanopartikulären Photohalbleiter sind bevorzugt aus Metalloxiden, Metallsulfiden und -seleniden, 111-V-Photohalbleitern und SiN ausgewählt ist. Beispiel für photoleitende Metalloxide sind ZnO, TiO₂, SnO₂, NaTaO₃, KTaO₃, Fe₂O₃, ZrO₂, WO₃, ITO (mit Indium dotiertes Zinnoxid) und ATO (mit Antimon dotiertes Zinnoxid). Photoleitende Sulfide und Selenide können z.B. aus ZnS, CdS, ZnSe, CdSe, Al₂Se₃ ausgewählt sein. Beispiele für III-V-Photohalbleiter sind GaN, lnN und GaP. Ein weiterer einsetzbarer Photohalbleiter ist SiN. Alle diese Photohalbleiter können auch dotiert sein, um eine geeignete Bandlücke, wie nachstehend erläutert, zu schaffen.

Die Bandlücken der Photohalbleiter sind von einer solchen Größe, dass die Photohalbleiter im UV- oder sichtbaren Wellenlängenbereich absorbieren oder mit Licht angeregt werden können.

Die Oberfläche der nanopartikulären Photohalbleiter ist mit einem Initüerungsradikal-Vorläufer (hierin auch als Mediator bezeichnet) funktionalisiert oder modifiziert.

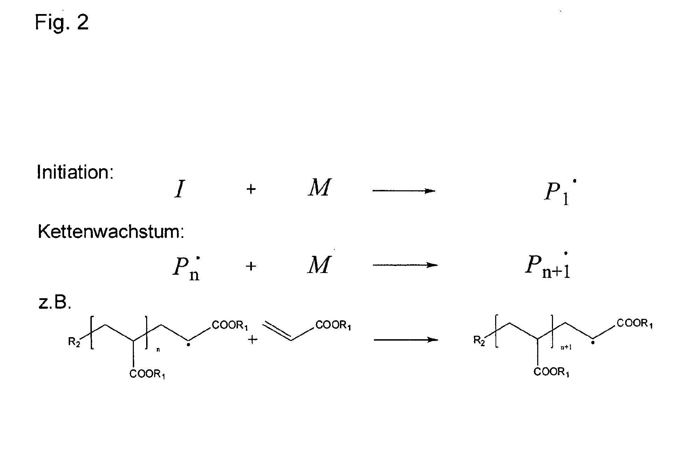

Ein Initüerungsradikal (oder auch Radikalstarter) im Sinne der Erfindung kann eine Radikalpolymerisation starten und aufrechterhalten (s. Fig. 2).

Dieser ist so an die Oberfläche gebunden ist, dass das Verbundmaterial aus Photohalbleiter und gebundenem Photoinitiator-Vorläufer, d.h. der erfindungsgemäße nanopartikuläre Photoinitiator, isolierbar ist. Die Bindung kann durch Adsorption (Chemisorption) oder durch eine Ionenbindung zustande kommen.

Unter Initüerungsradikal-Vorläufer wird erfindungsgemäß eine Verbindung verstanden, aus der unter geeigneten Bedingungen, wie nachstehend erläutert, ein Initiierungsradikal (oder ein Radikalstarter) für eine radikalische Polymerisation hervorgehen kann.

Wenn der erfindungsgemäße Photoinitiator mit einer Wellenlänge, die von dem Photohalbleiter absorbiert wird, bestrahlt wird, zerfällt der erfindungsgemäße Initiierungsradikal-Vorläufer in ein neutrales Molekül und ein Radikal mit einer Lebensdauer (in Inertgasatmosphäre) von 5x10⁻³ s bis 15 s, bevorzugt 5x10⁻² s bis 10 s, z.B. 10⁻¹ s bis 1 s.

Die neutralen stabilen Moleküle, die aus dem Initüerungsradikal-Vorläufer abgespaltet werden, sind z.B. aus CO₂, einem Phosphin, das mit einem oder mehreren Resten substituiert ist, Ammoniak, einem primären, sekundären oder tertiären Amin, Schwefel, SO₂ und SO₃ ausgewählt, bevorzugter aus CO₂, Triphenylphosphin und einem sekundären Amin. Der Initiierungsvorläufer wird bevorzugt so ausgewählt, dass das neutrale stabile Molekül, das aus ihm hervorgeht, unter den Reaktionsbedingungen inert ist.

Das Radikal, das aus dem Initiierungsradikal-Vorläufer hervorgeht, hat eine Lebensdauer von mindestens 5x10⁻³ s. Derartige Radikale sind stabilisierte Radikale. Dazu gehören in erster Linie mesomerie-stabilisierte Radikale, aber auch bis zu einem gewissen Maß sterisch gehinderte Radikale, wie z.B. ein Alkanoyl-Radikal, insbesondere das Acetyl-Radikal, das Acetonyl-Radikal, Benzoyl-Radikal, Benzyl-Radikal, tert-Butyl-Radikal und viele weitere durch Acyl- oder Carbonyl-, Aryl- und Heteroaryl-Gruppen stabilisierte Radikale sowie z.B. durch Halogen-, OH-, stickstoff-, phosphor- und schwefelhaltige Gruppen stabilisierte Radikale.

Das Radikal sollte aber auch nicht völlig unreaktiv sein, d.h. eine Lebensdauer von mehr als 15 s aufweisen. Ein ungeeignetes, da aus sterischen Gründen zu unreaktives Radikal wäre z.B. das Triphenylmethyl-Radikal.

Der Initiierungsradikal-Vorläufer ist gewöhnlich über die Gruppe an den nanopartikulären Photohalbleiter gebunden, die nach Belichtung das neutrale stabile Molekül ergibt.

Geeignete Initiierungsradikal-Vorläufer sind z.B. α-Ketocarbonsäuren, β-Carbonylalkylphosphoniumsalze, 1,1-Dimethylalkanthiole, Arylmethansulfonsäuren, Arylmethansulfinsäuren und Amine wie Triethanolaminhydrochlorid. Besonders bevorzugt sind Brenztraubensäure, Benzoylameisensäure und Acetonylphoshoniumchlorid. Brenztraubensäure zerfällt beim Bestrahlen des erfindungsgemäßen Photoinitiators mit geeigneten Lichtwellen zu CO₂ und einem stabilisierten Acetyl-Radikal, Benzoylameisensäure zerfällt zu CO₂ und einem stabilisierten Benzoyl-Radikal und Acetonyltriphoshoniumchlorid zerfällt zu Triphenylphosphin und einem stabilisierten Acetonyl-Radikal.

Der Initiierungsradikal-Vorläufer kann gegebenenfalls auch selbst ein Photoinitiator sein, der Strahlung mit einer Wellenlänge absorbiert, die von dem Photohalbleiter absorbiert wird, und dabei ein Radikal erzeugt, das als Initiierungsradikal dienen kann (wie z.B. Benzoylameisensäure). Jedoch ist ein derartiger Initiierungsradikal-Vorläufer ein effizienterer Radikalstarter, wenn er an einen Photohalbleiter gebunden ist.

Wenn die Photohalbleiteroberfläche einen basischen Charakter hat, wie dies bei gewissen Oxiden (z.B. ZnO und ZrO₂) der Fall ist, wird im Allgemeinen ein Initiierungsradikal-Vorläufer gewählt, der sauer ist.

Wenn die Photohalbleiteroberfläche einen sauren Charakter hat, wie dies bei gewissen anderen Oxiden (z.B. TiO₂ und SnO₂) der Fall ist, wird im Allgemeinen ein Initiierungsradikal-Vorläufer gewählt, der basisch oder kationisch ist, z.B. ein Triphenylphoshoniumsalz. Durch Erhöhung der Acidität der Carbonsäuren (-M- oder -l-Effekt) ist es jedoch auch möglich, diese an eine tendenziell saure Partikeloberfläche zu binden.

Dem Fachmann ist bekannt, welche Photohalbleiter eine saure Oberfläche aufweisen und welche eine basische Oberfläche aufweisen. Gleichfalls ist bekannt, wie sich ein negativer induktiver Effekt (-l) bzw. ein negativer Mesomerieeffekt (-M) z.B. bei einer Carbonsäure realisieren lässt.

Der Mechanismus des Zerfalls der vorliegenden nanopartikulären Photoinitiatoren bei Belichtung verläuft, ohne dass man darauf festgelegt werden will, vermutlich analog zum Mechanismus der Photo-Kolbe-Reaktion, wobei jedoch bei der letztgenannten der Photoinitiator nicht an die Oberfläche eines Photohalbleiters gebunden ist.

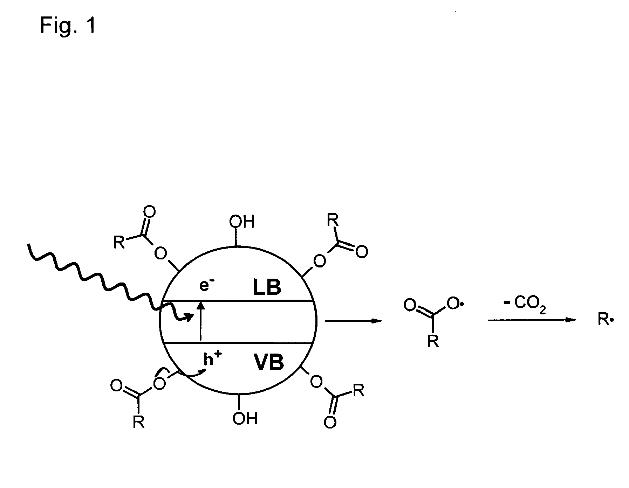

Für den Fall eines basischen Photohalbleiters ist dieser vermutete Mechanismus in Figur 1 dargestellt. Ein Elektron des Photohalbleiters wird in das Leitungsband angeregt und hinterlässt im Valenzband ein positives Loch. Diese entzieht dem gezeigten Carboxylat-Rest ein Elektron, der dadurch zu einem Carboxylradikal-Rest wird. Dieser Radikalrest spaltet CO₂ ab. Anders als bei der ursprünglichen Photo-Kolbe-Reaktion (siehe Einleitung) dimerisiert dieses Radikal nicht sofort, da es stabilisiert ist, sondern startet eine radikalische Polymerisation, wie dies in Figur 2 gezeigt ist.

Da das Radikal erfindungsgemäß stabilisiert und damit relativ langlebig ist, können damit Polymerisationen in Medien initiiert werden, die für die herkömmliche Photo-Kolbe-Reaktion ungeeignet sind, d.h. in denen keine Initiierung der Polymerisation stattfindet (wie z.B. in lösungsmittelfreien Monomeren).

Die Initiierungsradikal-Vorläufer können bei geeigneter Anpassung an das Monomer bzw. sich bildende Polymer (z.B. bezüglich der Polarität) auch eine kolloidale Stabilisierung der nanopartikulären Photohalbleiter bei der Polymerisation sicherstellen. Die führt zu einer vergrößerten spezifischen Oberfläche und damit zu einer höheren Aktivität der Photoinitiatoren und wegen der besseren Verteilung (idealerweise Dispergierung auf Primärpartikelgröße) zu einer homogeneren Polymerisation.

Die erfindungsgemäßen partikulären Photoinitiatoren können, wenn die Dispergierung bis auf Primärteilchengröße gelingt, in transparenten Bindemittelsystemen vor und nach der Polymerisation für den sichtbaren Spektralbereich transparente Dispersionen bilden.

Unterhalb der Absorptionsgrenze des Photohalbleiters, z.B. bei TiO₂ für den UV-Bereich, sind sie erwartungsgemäß nicht transparent.

Die erfindungsgemäßen partikulären Photoinitiatoren sind nach der Härtung in der polymeren Matrix der Zusammensetzung immobilisiert, sie migrieren nicht durch die Polymermatrix hindurch. Dies beruht zum einen auf ihrer Größe und zum anderen auf der Tatsache, dass die Härtung, wie durch ESR-Experimente belegt, von der Partikeloberfläche aus, d.h. um die Partikel herum, erfolgt. Der relative Anteil an gefangenen Radikalen in diesem immobileren Matrixbereich ist im Vergleich zur Härtung mit molekularen Photoinitiatoren erhöht.

Ganz wesentlich ist auch, dass sich keine freien unzersetzten Initiierungsradikal-Vorläufer in der Polymermatrix befinden, da sie an die Partikeloberfläche gebunden sind.

Durch den synergetischen Effekt zwischen Photohalbleiter-Nanopartikel und Initiierungsradikal-Vorläufer (Mediatormolekül) konnte, wie überraschenderweise festgestellt wurde, die photokatalytische Aktivität soweit gesteigert werden, dass die Verwendung als nanopartikuläre Photoinitiatoren für strahlenhärtende Druckfarben, Lacke und Klebstoffe möglich ist. Die Reaktionszeiten der photokatalytisch funktionalisierten photoreaktiven Nanopartikel sind vergleichbar mit denjenigen der heutzutage üblichen molekularer Photoinitiatoren (z.B. Irgacure 651 oder Darocur 1173). Gegenüber diesen handelsüblichen Photoinitiatoren haben die erfindungsgemäßen photokatalytisch funktionalisierten photoreaktiven Nanopartikel aber den Vorteil, dass sie in den ausgehärteten Druckfarben, Lacken und Klebstoffen immobilisiert sind, somit nicht austreten und die Umgebung nicht kontaminieren können.

### BEISPIELE

### Beispiel 1

### 1.1. Herstellung einer Suspension von nanokristallinem Zinkoxid

Es werden 20,5 g, 0,15 mol, Zinkchlorid, wasserfrei, in 180 ml Methanol gelöst. Ebenso werden 12 g (0,3 mol) Natriumhydroxid in 120 ml Methanol gelöst. Nach Aufklaren und Abkühlung wird die Natriumhydroxidlösung rasch mit der stark gerührten ZnCl₂-Lösung vereint. Sehr schnell ist eine Trübung zu erkennen, das heißt durch Hydrolyse wird das Zinkoxid gebildet. Bei Raumtemperatur wird ca. 12 Stunden weiter gerührt. Die Reaktionsmischung wird bei 3500 Umdrehungen pro Minute zentrifugiert. Der Überstand wird komplett verworfen und die feste Phase getrennt. Nach zweimaligem Waschen mit Methanol oder bevorzugt mit Ethanol und Phasentrennung durch Zentrifugieren ist das restliche Natriumchlorid entfernt. Zur Vermeidung von Agglomeration ist darauf zu achten, dass das Zinkoxid nicht vollständig getrocknet wird, sondern pastenförmig bleibt. Das Zinkoxid hat die kubische Zinkblende-Struktur und besteht aus sphärischen Kristalliten, die einen Durchmesser von etwa 8 nm aufweisen. Belegt werden diese Angaben durch Transmissionselektronenmikroskopie, Lichtstreuung und Röntgendiffraktion.

### 1.2. Oberflächenfunktionalisierung mit Benzoylameisensäure

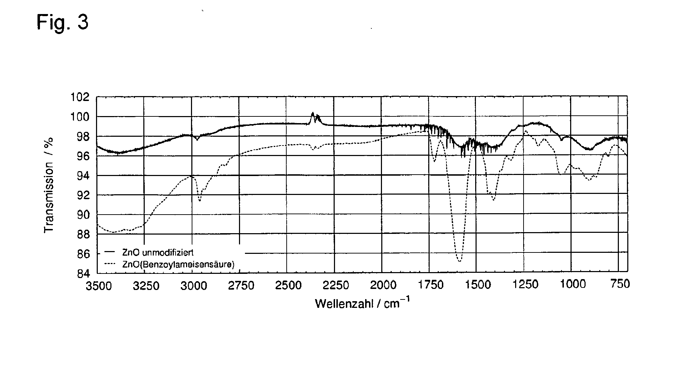

Das gesamte nach der Vorschrift von Beispiel 1 hergestellte Zinkoxid, ca. 12,2 g, wird in 100 ml Ethanol redispergiert und auf 70°C erhitzt. Maximal 31 mmol Benzoylameisensäure (Ph-C(O)-COOH, Ph = Phenyl) werden in 10 ml Lösungsmittel gelöst und mit der Dispersion vereint. Nach einer Stunde wird das modifizierte Zinkoxid durch Zentrifugation abgetrennt. Die Aufreinigung erfolgt durch Spülen des Präzipitates mit je 100 ml Lösungsmittel und erneute Zentrifugation. Dieser Schritt wird 2- bis 3-mal wiederholt. Durch Infrarotspektroskopie in Mehrfachreflexion lässt sich die erfolgreiche Funktionalisierung nachweisen, siehe Figur 3. Die Banden bei 1600 cm⁻¹ und 1400 cm⁻¹ sind spezifisch für ein Carboxylat und belegen die Bindung an die ZnO-Oberfläche.

Eine ethanolische Dispersion des Produkts (weiße Paste) kann unter Lichtausschluss und in dichter Verpackung aufbewahrt werden.

### Beispiel 2

### Oberflächenfunktionalisierung mit Brenztraubensäure

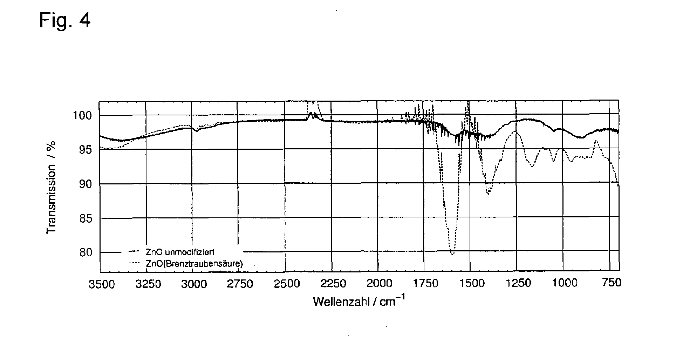

12,2 g nach der Vorschrift von Beispiel 1.1. hergestelltes Zinkoxid werden in 100 ml Methanol redispergiert und auf 70°C erhitzt. Maximal 31 mmol Brenztraubensäure (CH₃-C(O)-COOH) werden in 10 ml Lösungsmittel gelöst und mit der Dispersion vereint. Nach einer Stunde wird das modifizierte Zinkoxid durch Zentrifugation abgetrennt. Die Aufreinigung erfolgt durch Spülen des Präzipitates mit je 100 ml Ethanol und erneute Zentrifugation. Dieser Schritt wird 2- bis 3-mal wiederholt. Durch Infrarotspektroskopie in Mehrfachreflexion lässt sich die erfolgreiche Funktionalisierung nachweisen, siehe Figur 4. Die Banden bei 1600 cm⁻¹ und 1400 cm⁻¹ sind spezifisch für ein Carboxylat und belegen die Bindung an die ZnO-Oberfläche.

Eine ethanolische Dispersion des Produkts (weiße Paste) kann unter Lichtausschluss und in dichter Verpackung aufbewahrt werden.

### Beispiel 3

### 3.1. Einarbeiten in ein Bindemittelsystem bzw. eine Druckfarben-, Lack oder Klebstoffformulierung

Eine wie in Beispiel 1 oder Beispiel 2 hergestellte Photoinitiator-Paste wird in Ethanol dispergiert. Das nanoskalige funktionalisierte Metalloxid kann als Dispersion nach klassischen Verfahren, z.B. mit Hilfe einer Tellerreibe, einem Ultratorrax oder einem Dreiwalzenstuhl in ein Bindemittel eingebracht werden. Da der Gewichtsgehalt der alkoholischen Dispersion leicht zu bestimmen ist, kann der Gehalt im Bindemittel leicht berechnet werden. Der Gehalt an erfindungsgemäßem Material (Halbleiter mit Mediator auf der Oberfläche) kann bis zu 20 Gewichtsprozent betragen.

### 3.2. Konventionelle Überprüfung der UV-Härtung

Die Prüfung der Härtung erfolgt konventionell mittels Taktizitätsuntersuchungen z.B. mit Hilfe einer UV-Polymerisationsanlage. Eine geeignete Anlage ist die Minicure-Laboranlage, Typ M-25-1-URS-TR-SLC, der Firma IST METZ mit Hauptsitz in Nürtingen, mit einer maximalen Lampenleistung von 200 Watt cm⁻¹ und einer maximalen Durchlaufgeschwindigkeit von 100 m min⁻¹. Das mit dem erfindungsgemäßen Material beaufschlagte Bindemittelsystem wird mit einer Probedruckmaschine auf einen Probestreifen, z.B. aus PVC, aufgetragen. Die Schichtdicke beträgt wenige µm, wird aber durch Wiegen quantifiziert. Typisch ist ein Auftrag von 1,5 g/m². Der Labortrockner wird beispielsweise auf eine Strahlungsleistung von 90 Watt cm⁻¹ und eine Durchlaufgeschwindigkeit von 70 m S⁻¹ eingestellt. Nach jedem Durchlauf wird per Daumenabdruck überprüft, ob das System schon ausgehärtet ist. Die Anzahl der Durchläufe bis zur Aushärtung ist dann ein Maß für die Reaktionsgeschwindigkeit der Polymerisation. Für ein gegebenes Bindemittelsystem gilt: je weniger Durchläufe zur Härtung nötig sind, desto reaktiver ist der Photoinitiator. Mit diesem Messsystem kann festgestellt werden, dass die Aushärtung eines mit dem erfindungsgemäßen Material beaufschlagten Acrylats mehr als doppelt so schnell erfolgt wie die Aushärtung dieses Acrylats ohne Initiator.

### 3.3 Kinetik der Polymerisationsreaktion über Realzeit-Ramanspektroskopie

Die Kinetik der Härtung kann auch durch in-situ-FT-Raman-Spektroskopie erfolgen, z.B. mit Hilfe eines Bruker Optics Multiram-Spektrometers. Dazu wird das mit dem erfindungsgemäßen Material beaufschlagte Bindemittelsystem in eine Zelle gegeben, die eine Schichtdicke von 0,05 mm hat. Diese dient als Küvette (Probenhalter) im Raman-Spektrometer. Die Vorderseite der Küvette wird im Raman-Spektrometer vom Raman-Anregungslaser bestrahlt und von der Vorderseite wird in Reflexion das Raman-Streulicht von der Optik des Raman-Spektrometers eingesammelt. Die Aufnahme eines Raman-Spektrums dauert nur 25 Sekunden und wird von der UV-Lampe gesteuert wiederholt.

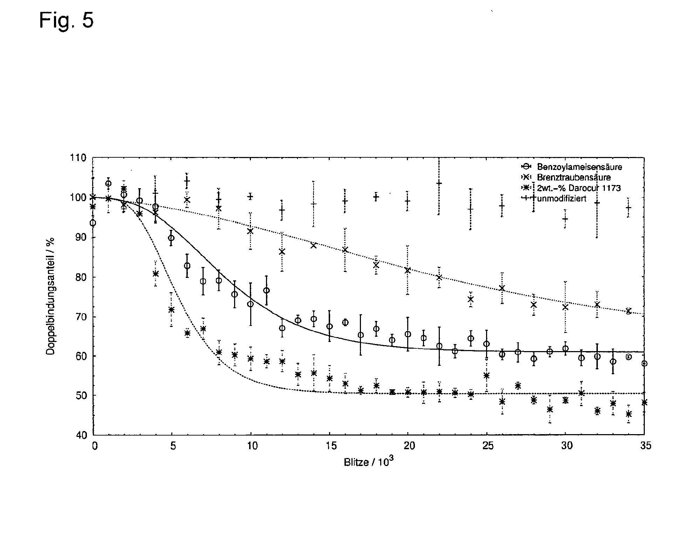

Wenn keine Raman-Messung erfolgt, wird die Küvette von der Rückseite über einen Lichtleiter mit UV-Blitzlicht (66 Blitze pro s) bestrahlt. Dieses UV-Licht löst im Bindemittelsystem die Härtung aus, so dass jetzt in-situ mittels Realzeit-Ramanspektroskopie die Kinetik der Polymerisationsreaktion verfolgt werden kann. Dazu untersucht man die Intensität einer Doppelbindungsschwingungsbande des Monomers bei ca. 1635 cm⁻¹. Durch die Polymerisation werden die Doppelbindungen verbraucht, was zu einer zeitlichen Abnahme der Intensität führt. Eine solche Messung ist in Figur 5 dargestellt.

Deutlich ist zu erkennen, dass die modifizierten Zinkoxide eine Abnahme der Intensität der Doppelbindungsbande und damit eine Härtung des Lackfilms bewirken. Obwohl die Optimierung des Systems noch nicht abgeschlossen ist, härten die durch die nanopartikulären Photoinitiatoren initiierten Proben näherungsweise so schnell wie der eingesetzte klassische Initiator Darocur 1173. Der bei großen Zeiten erreichte höhere Anteil an Intensität der Doppelbindungsschwingungsbanden belegt die geringe Mobilität, d.h. die zusätzliche Verkapselung, der Starter.

### Beispiel 4

### 4.1. Herstellung von nanokristallinem Titandioxid in der Anatas-Modifikation

Zu einer Mischung von 192 g, (0,68 mol) Titan-tetraisopropanolat und 235 ml 1-Pentanol werden 11,2 ml rauchende HCI-Lösung (37 %-ig) zugegeben und 10 Minuten bei Raumtemperatur gerührt. Danach werden 14,2 ml bidestilliertes Wasser unter starkem Rühren langsam zugetropft. Es entsteht ein leicht trübes Reaktionsgemisch, das anschließend 24 h bei 130 °C gerührt wird. Während dieser Zeit wird durch Hydrolyse und Polykondensation das Titandioxid gebildet, was durch Ausfallen eines Feststoffes aus dem Gemisch zu erkennen ist. Mit Hilfe eines Rotationsverdampfers werden danach die flüchtigen Komponenten bei 65 °C und sukzessiver Verminderung des Druckes bis auf 2 mbar entfernt.

Das so hergestellte Titandioxid liegt in der tetragonalen Anatas-Modifikation vor und besteht aus sphärischen Kristalliten, die einen Durchmesser von 5 nm aufweisen. Belegt wurden diese Angaben durch

Transmissionselektronenmikroskopie, dynamische Lichtstreuung und Röntgendiffraktion.

### 4.2. Oberflächenfunktionalisierung mit Acetonyltriphenylphosphoniumchlorid in Verdünneracrylat

Von dem erfindungsgemäß hergestellten, trockenen, oberflächenmodifizierten, nanoskaligen TiO₂-Pulver wird eine 10 gewichtsprozentige Dispersion in Toluol hergestellt. Das Pulver ist in apolaren organischen Lösungsmitteln nur durch Rühren bei Raumtemperatur dispergierbar. Es entsteht eine stabile, klare und optisch transparente Dispersion. Zusätzlich werden dieser Dispersion ein Verdünneracrylat und Acetonyltriphenylphosphoniumchlorid ((Ph₃PCH-C(O)-CH₃)⁺Cl⁻) zugesetzt. Dabei wird ein Verhältnis 45:55 Gew.% TiO₂ zu Acetonyltriphenylphosphoniumchlorid eingestellt. Abschließend wird Toluol aus der Mischung durch Evaporation entfernt.

Man erhält eine transparente, weil nanoskalige Formulierung, in die direkt die für die Herstellung von Druckfarben benötigten weiteren Komponenten eingerührt werden können.

Das mit Acetonyltriphenylphosphoniumchlorid funktionalisierte TiO₂ kann alternativ lediglich in Toluol als Lösungsmittel hergestellt und anschließend durch Entfernern des Lösungsmittels und Waschen, wie in den Beispielen 1 und 2 für funktionalisiertes ZnO beschrieben, isoliert werden.

### 4.3. Einarbeitung in eine Druckfarbenformulierung

In die in Abschnitt 4.2. beschriebene Zubereitung (oberflächenmodifizierte nanoskalige TiO₂-Partikel in Verdünneracrylat) werden die Komponenten eingerührt, die typischerweise für die Herstellung von Druckfarbenformulierungen verwendet werden. Es handelt sich unter anderem dabei um Acrylate, Rheologie-Additive, Filmbildner und Pigmente. Die Gesamtmenge an oberflächenmodifizierten nanoskaligen TiO₂-Partikeln ohne Verdünneracrylat beträgt nicht mehr als 4 Gewichtsprozent in der Gesamtformulierung, um eine Härtung zu erzielen. Die typische Mischzeit zur Homogenisierung der Komponenten beträgt ohne Einsatz besonderer Dispergierapparaturen nur 1 ― 3 min, da die homogene Verteilung der Partikel bereits im Verdünneracrylat erfolgt ist.

### 4.4. Applikation

Die Applikation kann mit einem manuellen, halb- oder vollautomatischen Walzendruckwerk auf nicht-saugenden Untergründen (z.B. PVC-Streifen) oder auf saugenden Untergründen (z.B. Papierstreifen) erfolgen. Typischerweise werden 1,5 g Gesamtformulierung auf 1 m² Beschichtungsfläche appliziert.

### 4.5. Härtung

Die Aushärtung erfolgt mit einer IST-UV-Minicure-Laboranlage ("Typ M-25-1-Tr-SS"). Dabei können sowohl die eingestrahlte Intensität (100 mW / cm² bis 200 mW / cm²) als auch die Bandgeschwindigkeit (von 10 m / min bis 100 m / min) variiert werden. Typischerweise erfolgt die Aushärtung bei unpigmentierten Systemen bei 200 mW CM⁻² und einer Durchlaufgeschwindigkeit von 50 m / min innerhalb eines Durchgangs. Bei pigmentierten Systemen variiert die Härtung je nach verwendetem Farbpigment zwischen 1-2 (magenta) und 2-3 (schwarz) Durchgängen. Ohne Zusatz des erfindungsgemäßen Materials beträgt die Aushärtungszeit des unpigmentierten Materials 4 Durchgänge und des pigmentierten Materials zwischen 9 (magenta) und 11 (schwarz) Durchgängen.

### Beispiel 5

### 5.1 Herstellung einer Suspension von nanokristallinem Titandioxid in der Rutil-Modifikation

Es werden 26,8 g, 0,14 mol TiCl₄ in eine Lösung aus 375 ml Wasser und 15 ml HCl (37%-ig) unter Aceton/Eis-Kühlung eingeleitet. Es wird 1 Stunde gerührt. Anschließend wird das Reaktionsgemisch 3 Stunden auf 60°C erhitzt, die vorher trübe Lösung klärt sich zuerst. Nach ca. 1 Stunde fällt das TiO₂ langsam aus.

Bei Raumtemperatur wird ca. 12 Stunden weitergerührt. Das Reaktionsgemisch wird bei 4500 Umdrehungen pro Minute zentrifugiert. Der Überstand wird verworfen, das Titandioxid wird dann erst mit Wasser und dann zweimal mit Ethanol gewaschen. Das Titandioxid sollte pastenförmig bleiben und nicht ganz getrocknet werden. Aus thermodynamischen Gründen entsteht daraus Rutil.

### 5.2. Oberflächenfunktionalisierung mit Benzoylameisensäure

Das gesamte nach der Vorschrift hergestellte Titandioxid wird in 100 ml Ethanol redispergiert und auf 70°C erhitzt. Maximal 31 mmol Benzoylameisensäure (Ph-C(O)-COOH, Ph = Phenyl) werden in 20 ml Ethanol gelöst und zur Dispersion zugegeben. Nach einer Stunde wird das modifizierte Titandioxid abgekühlt und durch Zentrifugation abgetrennt. Die Aufreinigung erfolgt durch Spülen des Titandioxids mit je 100 ml Ethanol und erneute Zentrifugation. Dieser Schritt wird 2- bis 3-mal wiederholt.

Eine ethanolische Dispersion des Produkts (weiße Paste) kann unter Lichtausschluss und in dichter Verpackung aufbewahrt werden.

### 5.3 Einarbeitung in die Druckformulierung

Die Einarbeitung erfolgt analog zu der in Punkt 3.1 beschriebenen.

Der relevante Inhalt aller hierin zitierten Patente, Patentanmeldungen, und Zeitschriftenaufsätze wird hiermit durch Bezugnahme in diese Patentanmeldung aufgenommen.

## Patentansprüche

1. Nanopartikulärer, isolierbarer Photoinitiator, umfassend einen nanopartikulären, sichtbares oder UV-Licht absorbierenden Photohalbleiter und einen an den Photohalbleiter gebundenen Initiierungsradikal-Vorläufer, der bei Bestrahlung mit einer Wellenlänge, die von dem Photohalbleiter absorbiert wird, in ein neutrales stabiles Molekül und ein Radikal mit einer Lebensdauer von 5x10⁻³ s bis 15 s zerfällt.

2. Nanopartikulärer Photoinitiator nach Anspruch 1, **dadurch gekennzeichnet, dass** der Photohalbleiter aus Metalloxiden, Metallsulfiden und -seleniden, III-V-Photohalbleitern und SiN ausgewählt ist.

3. Nanopartikulärer Photoinitiator nach Anspruch 2, **dadurch gekennzeichnet, dass** er aus ZnO, ZrO₂, SnO₂ und TiO₂ ausgewählt ist.

4. Nanopartikulärer Photoinitiator nach einem der Ansprüche 1 bis 3, **dadurch gekennzeichnet, dass** der Teil des Initiierungsradikal-Vorläufers, der nach dem Zerfall das neutrale stabile Molekül bilden, an den Photohalbleiter gebunden ist.

5. Nanopartikulärer Photoinitiator nach einem der Ansprüche 1 bis 4, **dadurch gekennzeichnet, dass** die Bindung des Initiierungsradikal-Vorläufers an den Photohalbleiter eine lonenbindung ist oder durch Chemisorption zustande kommt.

6. Nanopartikulärer Photoinitiator nach einem der Ansprüche 1 bis 5, **dadurch gekennzeichnet, dass** das neutrale stabile Molekül aus CO₂, einem Phosphin, das mit einem oder mehreren Resten substituiert ist, Ammoniak, einem primären, sekundären oder tertiären Amin, Schwefel, SO₂ und SO₃ ausgewählt ist.

7. Nanopartikulärer Photoinitiator nach Anspruch 6, **dadurch gekennzeichnet, dass** das neutrale stabile Molekül aus CO₂, Triphenylphosphin und einem sekundären Amin ausgewählt ist,

8. Nanopartikulärer Photoinitiator nach einem der Ansprüche 1 bis 7, **dadurch gekennzeichnet, dass** das Radikal aus einem Alkanoyl-Radikal, insbesondere Acetyl-Radikal, einem Acetonyl-Radikal und einem Benzoyl-Radikal ausgewählt ist.

9. Nanopartikulärer Photoinitiator nach einem der Ansprüche 1 bis 7, **dadurch gekennzeichnet, dass** der Initiierungsradikal -Vorläufer selbst ein Photoinitiator ist, der sichtbares oder UV-Licht absorbiert und dabei ein Radikal erzeugt, das als Initiierungsradikal dienen kann.

10. Nanopartikulärer Photoinitiator nach einem der Ansprüche 1 bis 9, **dadurch gekennzeichnet, dass** die Lebensdauer des Radikals 10⁻¹ s bis 10 s beträgt.

11. Verfahren zur Radikalpolymerisation, **dadurch gekennzeichnet, dass** ein nanopartikulärer Photoinitiator nach einem der Ansprüche 1 bis 10 als Photoinitiator bei einer Polymerisation eines oder mehrerer Monomere, die radikalisch polymerisiert werden können, eingesetzt wird.

12. Verfahren nach Anspruch 11, **dadurch gekennzeichnet, dass** die Monomere eine ungehärtete Druck-, Lack- oder Klebstoffschicht bilden oder ein Teil davon sind.
